# EUROPÄISCHE PATENTANMELDUNG

(11) **EP 3 546 269 A2**
(43) Veröffentlichungstag der Anmeldung: **02.10.2019**
(21) Anmeldenummer: 19163449.2
(22) Anmeldetag: 18.03.2019
(51) Int. Cl.: B60K 17/344, B60K 5/02, B60K 17/28, F16H 9/14

(54) **KRAFTFAHRZEUG MIT ALLRADANTRIEB**

(30) Priorität: 26.03.2018 DE 102018002464
(71) Anmelder: Neander Motors AG, 24143 Kiel (DE)
(72) Erfinder: Brüstle, Claus, 74226 Nordheim (DE); Lester, Lutz W., 24802 Emkendorf (DE)
(74) Vertreter: Lobemeier, Martin Landolf

(57) **Zusammenfassung**

Kraftfahrzeug (1) mit einem Motor (2) und einem Getriebe (3) mit einer vom Motor (2) angetriebenen, den Motor (2) mit dem Getriebe (3) verbindenden Antriebswelle (28), einer sich entlang der Fahrzeuglängsachse in der einen Richtung erstreckenden ersten Abtriebswelle (32), die mittels eines ersten Ausgleichsgetriebes (34) mit einer ersten Radachse (4) verbunden ist, und einer sich entlang der Fahrzeuglängsachse in der entgegengesetzten Richtung erstreckenden zweiten Abtriebswelle (33), die mittels eines zweiten Ausgleichsgetriebes (35) mit einer zweiten Radachse (5) verbunden ist, dadurch gekennzeichnet, dass die Antriebswelle (28) in der Längsachse (C-C) des Kraftfahrzeugs (1) angeordnet ist und die erste und die zweite Abtriebswelle (32, 33) auf sich zur Längsachse (C-C) des Kraftfahrzeugs (1) gegenüberliegenden Seiten mit identischem Abstand zur Längsachse (C-C) des Kraftfahrzeugs (1) beabstandet angeordnet sind.

## Beschreibung

Die Erfindung betrifft ein Kraftfahrzeug mit einem Motor und einem Getriebe mit einer vom Motor angetriebenen, den Motor mit dem Getriebe verbindenden Antriebswelle, einer sich entlang der Fahrzeuglängsachse in der einen Richtung erstreckenden ersten Abtriebswelle, die mittels eines ersten Ausgleichsgetriebes mit einer ersten Radachse verbunden ist, und einer sich entlang der Fahrzeuglängsachse in der entgegengesetzten Richtung erstreckenden zweiten Abtriebswelle, die mittels eines zweiten Ausgleichsgetriebes mit einer zweiten Radachse verbunden ist.

Ein derartiges Kraftfahrzeug ist bereits aus der DE 10 2017 007 552 A1 bekannt.

Weiter ist aus der US 3 331 464 A ein Kraftfahrzeug mit hoher Geländegängigkeit bekannt, zu dessen Antrieb eine zwischen einer Vorderachse und einer Hinterachse angeordnete Brennkraftmaschine dient. Die eine Fliehkraftkupplung aufweisende Brennkraftmaschine wirkt mit einer quer zur Fahrzeuglängsrichtung verlaufenden Antriebswelle und einem Winkeltrieb auf ein erstes Kegelscheibenpaar eines CVT-Getriebes (CVT: Continuously Variable Transmission) ein. Dessen zweites Kegelscheibenpaar ist mit einem Getriebe verbunden, das einerseits mit der Hinterachse und andererseits mit der Vorderachse in Wirkverbindung steht, so dass das Kraftfahrzeug über Vorderräder der Vorderachse und Hinterräder die Hinterachse vierradgetrieben ist.

Die JP S6 460 427 A offenbart einen Traktor mit Vierradabtrieb für landwirtschaftliche Zwecke. Dieser Traktor verfügt über eine Brennkraftmaschine, die mit einem beabstandete Kegelradscheibenpaare aufweisenden CVT-Getriebe zusammenarbeitet. Zwischen den Kegelradscheibenpaaren ist ein Endlostriebelement vorgesehen. Ein erstes Kegelradscheibenpaar arbeitet unter Zwischenschaltung eines Stirnradgetriebes und einem Winkeltrieb mit Rädern einer Hinterachse zusammen. Darüber hinaus überträgt das CVT-Getriebe mittels eines zweiten Kegelradscheibenpaars Antriebskräfte auf ein Getriebe, das unter Vermittlung einer Kardanwelle und eines Ausgleichsgetriebes Räder der Vorderachse antreibt.

Nachteilig an den bekannten Kraftfahrzeugen mit Allradantrieb ist jedoch die geringe Laufruhe und die teilweise verbesserungsfähige Stabilität des Kraftfahrzeugs insgesamt, letzthin also der geringe Fahrkomfort, der zwar zu einem Teil der den schwierigen Bodenverhältnissen, bei denen Fahrzeuge mit Allradantrieb verwendet werden geschuldet ist, zum anderen Teil aber an der Konstruktion derartiger Fahrzeuge liegt.

Aufgabe der Erfindung ist es daher, ein Kraftfahrzeug mit Allradantrieb zu schaffen, eine verbesserte Laufruhe, eine erhöhte Stabilität und einen hohen Fahrkomfort aufweist.

Diese Aufgabe wird durch das Kraftfahrzeug mit den Merkmalen von Anspruch 1 gelöst. Die abhängigen Ansprüche geben vorteilhafte Ausgestaltungen der Erfindung wieder.

Erfindungsgemäß wird also ein Kraftfahrzeug vorgeschlagen mit einem Motor und einem Getriebe mit einer vom Motor angetriebenen, den Motor mit dem Getriebe verbindenden Antriebswelle, einer sich entlang der Fahrzeuglängsachse in der einen Richtung erstreckenden ersten Abtriebswelle, die mittels eines ersten Ausgleichsgetriebes mit einer ersten Radachse verbunden ist, und einer sich entlang der Fahrzeuglängsachse in der entgegengesetzten Richtung erstreckenden zweiten Abtriebswelle, die mittels eines zweiten Ausgleichsgetriebes mit einer zweiten Radachse verbunden ist, wobei die Antriebswelle in der Längsachse des Kraftfahrzeugs angeordnet ist und die erste und die zweite Abtriebswelle auf sich zur Längsachse des Kraftfahrzeugs gegenüberliegenden Seiten mit identischem Abstand zur Längsachse des Kraftfahrzeugs beabstandet angeordnet sind.

Bevorzugt ist der Motor des Kraftfahrzeugs ein Verbrennungsmotor, insbesondere ein Dieselmotor.

Bevorzugt ist nicht nur vorgesehen, dass die erste und die zweite Abtriebswelle auf sich zur Längsachse des Kraftfahrzeugs gegenüberliegenden Seiten mit identischem Abstand zur Längsachse des Kraftfahrzeugs beabstandet angeordnet sind, sondern das der Motor, insbesondere der Dieselmotor derart angeordnet ist, dass die erste und die zweite Abtriebswelle bevorzugt auch auf sich zur Längsachse des Motors gegenüberliegenden Seiten mit identischem Abstand zur Längsachse des Motors beabstandet angeordnet sind.

Besonders bevorzugt weist der Verbrennungsmotor, speziell der Dieselmotor, zwei synchron im Gegensinn angetriebene Kurbelwellen auf, die mittels jeweils einem Pleuel mit wenigstens einem gemeinsamen Hubkolben verbunden sind, wobei die Kurbelwellen höchst bevorzugt symmetrisch zur Längsachse des Kraftfahrzeugs angeordnet sind.

Nach einer weiteren bevorzugten Ausgestaltung ist die eine Kurbelwelle mittels eines Zwischengetriebes mit der Antriebswelle des Getriebes verbunden, wobei das Zwischengetriebe speziell als Stirnradgetriebe ausgebildet ist. Das Stirnradgetriebe ist bevorzugt aus einem mit der einen Kurbelwelle verbundenen ersten Zahnrad und einem mit der Antriebswelle des Getriebes verbundenen zweiten Zahnrad gebildet, wobei das erste Zahnrad weiter bevorzugt einen geringeren Durchmesser als das zweite Zahnrad aufweist.

Die Kurbelwellen sind bevorzugt horizontal ausgerichtet, wobei weiter bevorzugt an dem dem Zwischengetriebe gegenüberliegenden Ende der Kurbelwellen Schwungräder angeordnet sind. So ist nach einer weiter vorteilhaften Ausgestaltung vorgesehen, dass wenigstens eine Zapfwelle, die mit einer der Kurbelwellen drehfest verbunden ist, wobei die Zapfwelle dem Schwungrad der Kurbelwelle benachbart angeordnet ist.

Die die erste Abtriebswelle und die zweite Abtriebswelle sind speziell so zueinander ausgerichtet, dass diese in einer Ebene angeordnet sind. Bevorzugt sind auch die Kurbelwellen in der Ebene der Abtriebswellen angeordnet.

Das Getriebe des Fahrzeugs ist bevorzugt ein stufenloses Getriebe, speziell ein CVT-Getriebe mit einem von der Antriebswelle angetriebenen Kegelscheibenradpaar ist. Bevorzugt ist ein vom Kegelscheibenradpaar angetriebenes, das Kegelscheibenradpaar mit der ersten Abtriebswelle und der zweiten Abtriebswelle verbindendes Endlostriebmittel vorgesehen. Das Endlostriebmittel ist insbesondere ein Schubgliederband.

Weiter ist bevorzugt vorgesehen, dass die Achse des Kegelscheibenradpaars, die Achse der ersten Abtriebswelle und die Achse der zweiten Abtriebswelle ein gleichschenkliges Dreieck ausbilden. Bei dem gedachten Dreieck handelt es sich insbesondere um ein stumpfwinkliges Dreieck.

Zwischen dem Kegelscheibenradpaar und der ersten Abtriebswelle ist bevorzugt ein auf das Endlostriebmittel wirkendes erstes Spannmittel vorgesehen, das insbesondere als hydraulische Spannvorrichtung ausgebildet ist.

Zusätzlich oder alternativ ist bevorzugt ein zwischen der ersten Abtriebswelle und der zweiten Abtriebswelle auf das Endlostriebmittel wirkendes zweites Spannmittel vorgesehen, das speziell als Spannrolle ausgebildet ist.

Schließlich ist bevorzugt vorgesehen, dass die erste Abtriebswelle und die zweite Abtriebswelle mit dem Endlostriebmittel zusammenwirkende Umlenkräder aufweisen.

Der Vorteil der vorliegenden Erfindung liegt insgesamt in einer Verbesserung der Laufruhe des Fahrzeugs, wobei die bevorzugten Ausgestaltungen jeweils weiter zu einer verbesserten Laufruhe des Kraftfahrzeugs beitragen.

Aufgrund der ausgezeichneten Eigenschaften des Fahrzeugs hinsichtlich dessen Laufruhe, eignet sich das Kraftfahrzeug nach der Erfindung insbesondere als agrar-, forst- und/oder bauwirtschaftliches Kraftfahrzeug, kann aber auch vorteilhaft bei Zivil- und Katastrophenschutzaufgaben zum Einsatz kommen. So erscheint insbesondere der Einsatz als Traktor vorteilhaft.

Die Erfindung wird anhand eines in den beigefügten Zeichnungen dargestellten, besonders bevorzugt ausgestalteten Ausführungsbeispiels näher erläutert. Es zeigen
- Fig. 1: eine schematische Draufsicht auf ein besonders bevorzugt ausgestaltetes Kraftfahrzeug;
- Fig. 2: eine geschnittene Ansicht entlang der in Fig. 1 dargestellten Linie II-II;

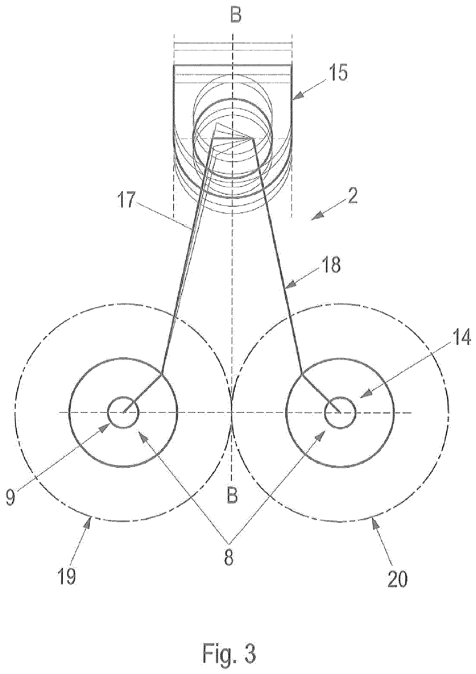

- Fig. 3: eine schematische Darstellung einer bevorzugt ausgestalteten Brennkraftmaschine mit zwei Kurbelwellen und wenigstens einem Hubkolben; und
- Fig. 4: eine schematische Teilansicht der Fig. 1.

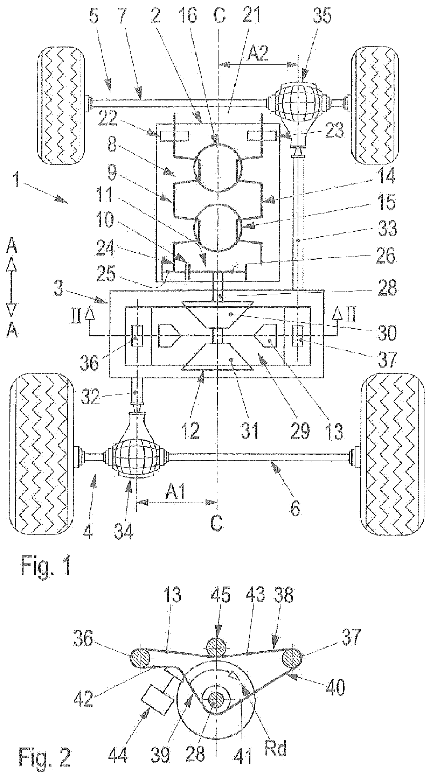

Fig. 1 zeigt ein besonders bevorzugt ausgestaltetes Ausführungsbespiel nach der Erfindung.

Insbesondere zeigt Fig. 1 ein Kraftfahrzeug 1, das als Traktor, Zugmaschine, Schlepper oder dergleichen ausgebildet und insbesondere für den Einsatz in unbündigem Untergrund der Agrar- und Bauwirtschaft oder für Zivilschutz- und Katastrophenschutzaufgaben geeignet ist.

Zu seiner Fortbewegung sind eine Brennkraftmaschine 2 und ein stufenloses Getriebe 3 in das Kraftfahrzeug 1 eingebaut. Das Getriebe 3 wirkt mit Fahrzeugantriebsachsen 4, 5, d.h. einer Hinterachse 6 und einer Vorderachse 7, zusammen, wobei diese Achsen mit Rädern versehen sind.

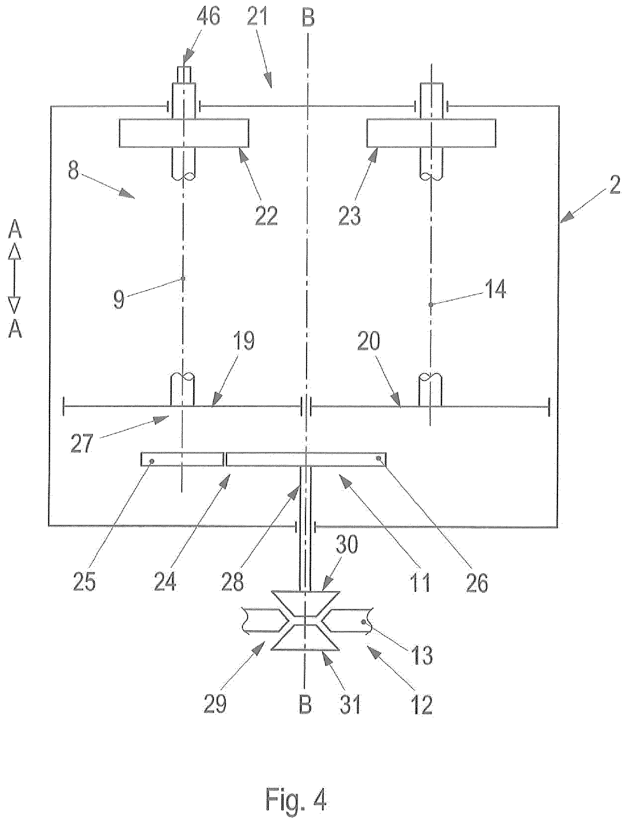

Die Brennkraftmaschine 2 weist ein sich in Fahrzeuglängsrichtung A-A (vgl. Fig. 4) erstreckendes Kurbelwellensystem 8 mit wenigstens einer horizontal ausgerichteten Kurbelwelle 9 auf, die an einem ersten der Hinterachse 6 zugewandten Endbereich 10 unter Vermittlung eines Zwischengetriebes 11 das Getriebe 3 mit einem stufenlosen Hauptgetriebe 12 antreibt, das wiederum über ein Endlostriebelement 13 die Fahrzeugantriebsachsen 4 und 5 bzw. deren Räder beeinflusst.

Das Kurbelwellensystem 8 umfasst eine Kurbelwelle 9 und eine weitere Kurbelwelle 14. Beide Kurbelwellen 9, 14 sind parallel zueinander angeordnet und werden von (in nicht dargestellten) Zylindern arbeitenden Hubkolben 15 und 16 angetrieben. Jeder Hubkolben 15, 16 ist mit jeweils einem Pleuel 17, 18 an die Kurbelwellen 9, 14 angeschlossen, wobei eine der Kurbelwellen 9 das Zwischengetriebe 11 antreibt. Die vorstehend beschriebene sogenannte Doppelkurbelwellen-Brennkraftmaschine 2 arbeitet bevorzugt im Dieselverfahren und speziell mit Direkteinspritzung, wobei sie höchst bevorzugt zur Erreichung einer definierten Betriebsgüte mit einer (nicht dargestellten) Turboladereinrichtung versehen ist.

Zur Laufruhenoptimierung der Brennkraftmaschine 2 drehen sich die Kurbelwellen 9, 14 gegenläufig sowie durch Synchronisationszahnräder 19, 20 bewerkstelligt synchron, wobei die Synchronisationszahnräder 19, 20 benachbart dem der Hinterachse 6 zugekehrten ersten Endbereich 10 auf den Kurbelwellen 9, 14 befestigt sind. Darüber hinaus sind an einem vom ersten Endbereich 10 abgekehrten zweiten Endbereich 21 der Kurbelwellen 9, 14 Schwungräder 22, 23 angebracht.

Das Zwischengetriebe 11 wird durch ein Stirnradgetriebe 24 mit zwei miteinander kämmenden Zahnrädern 25, 26 gebildet. Dabei weisen die Zahnräder 25, 26 des Zwischengetriebes 11 unterschiedliche Durchmesser auf. Das kleinere Zahnrad 25 ist benachbart einer Ausgangsseite 27 auf der Kurbelwelle 9 befestigt, wobei das größere Zahnrad 26 mit einer Eingangswelle 28 des Hauptgetriebes 12 verbunden ist. Speziell liegt das größere Zahnrad 26 mit der Eingangswelle 28 auf der zwischen den Kurbelwellen 9, 14 verlaufenden Brennkraftmaschinenlängsachse B-B.

Das stufenlose Hauptgetriebe 12 ist ein sogenanntes CVT-Getriebe 29, das über ein Paar von Kegelscheibenrädern 30, 31, nämlich Festrad und Wegrad, verfügt, wobei die Kegelscheibenräder 30, 31 von dem Endlosantriebmittel 13 umschlungen werden. Das Endlosantriebsmittel 13 arbeitet unter Vermittlung von Abtriebswellen 32, 33 mit den Fahrzeugantriebsachsen 4, 5 zusammen. Zwischen den Fahrzeugantriebsachsen 4, 5 und den Abtriebswellen 32, 33 des stufenlosen Hauptgetriebes 12 sind Ausgleichsgetriebe 34, 35 vorgesehen. Die Abtriebswellen 32, 33 des Hauptgetriebes 12 verlaufen mit gleichem Abstand, nämlich A1 = A2 zur Brennkraftmaschinenlängsachse B-B. Diese entspricht zugleich der Kraftfahrzeuglängsachse C-C.

Das Endlostriebelement 13 umschlingt an den Abtriebswellen 32, 33 vorgesehene Umlenkräder 36, 37 sowie die Kegelscheibenräder 30, 31 und bildet mit besagten Umlenkrädern 36, 37 sowie den Kegelscheibenrädern 30, 31 ein stumpfwinkeliges Dreieck 38 mit zwei gleichen Seiten 39, 40 (vgl. Fig.2). Die Brennkraftmaschine 2 ist eine mit Pfeilrichtung Rd bezeichnete rechtsdrehende Brennkraftmaschine 2 und weist demzufolge ein Lasttrum 41 und zwei Lostrume 42, 43 auf. Bei der oben beschriebenen Bauweise wirkt zumindest auf das Lasttrum 42 eine hydraulische Spannvorrichtung 44 ein. Darüber hinaus ist an greift am Lostrum 43 eine Spannrolle 45 an.

Schließlich besteht das Endlostriebelement 13 bevorzugt aus einem Schubgliederband. Zumindest dem Schwungrad 22 ist eine Zapfwelle 4 (Fig. 4) für Nebenantriebe, wie beispielsweise Seilwinden, Wasserpumpen, Mähwerke oder dergleichen, nachgeschaltet, wobei die Zapfwelle 4 mit der Kurbelwelle 9 drehfest verbunden ist.

### Bezugszeichenliste

1 Kraftfahrzeug
2 Brennkraftmaschine
3 Getriebesystem
4,5 Fahrzeugantriebsachse
6 Hinterachse
7 Vorderachse
A-A Fahrzeuglängsrichtung
8 Kurbelwellensystem
9 Kurbelwelle
10 Endbereich
11 Zwischengetriebe
12 Hauptgetriebe
13 Endlostreibelement
14 Kurbelwelle
15, 16 Hubkolben
17, 18 Pleuel
19, 20 Synchronisationszahnrad
21 Endbereich
22, 23 Schwungrad
24 Stirnradgetriebe
25, 26 Zahnrad
27 Ausgangsseite
28 Eingangswelle
B-B Brennkraftmaschinenlängsmittelebene
29 Transmissions-Getriebe
30, 31 Kegelscheibenrad
32, 33 Abtriebswelle
34, 35 Ausgleichsgetriebe
36, 37 Umlenkrad
38 Dreieck
39 Seite
Rd Pfeilrichtung
40, 41 Lasttrum
42, 43 Lostrum
44 Spannvorrichtung
45 Spannrolle
46 Zapfwelle

## Patentansprüche

1. Kraftfahrzeug (1) mit
- einem Motor (2) und
- einem Getriebe (3) mit
∘ einer vom Motor (2) angetriebenen, den Motor (2) mit dem Getriebe (3) verbindenden Antriebswelle (28),
∘ einer sich entlang der Fahrzeuglängsachse in der einen Richtung erstreckenden ersten Abtriebswelle (32), die mittels eines ersten Ausgleichsgetriebes (34) mit einer ersten Radachse (4) verbunden ist, und
∘ einer sich entlang der Fahrzeuglängsachse in der entgegengesetzten Richtung erstreckenden zweiten Abtriebswelle (33), die mittels eines zweiten Ausgleichsgetriebes (35) mit einer zweiten Radachse (5) verbunden ist,
**dadurch gekennzeichnet, dass**
die Antriebswelle (28) in der Längsachse (C-C) des Kraftfahrzeugs (1) angeordnet ist und die erste und die zweite Abtriebswelle (32, 33) auf sich zur Längsachse (C-C) des Kraftfahrzeugs (1) gegenüberliegenden Seiten mit identischem Abstand zur Längsachse (C-C) des Kraftfahrzeugs (1) beabstandet angeordnet sind.

2. Kraftfahrzeug (1) nach Anspruch 1, **dadurch gekennzeichnet, dass** der Motor (2) ein Verbrennungsmotor ist.

3. Kraftfahrzeug (1) nach einem der vorhergehenden Ansprüche, **dadurch gekennzeichnet, dass** der Verbrennungsmotor ein Dieselmotor ist.

4. Kraftfahrzeug (1) nach einem der vorhergehenden Ansprüche, **dadurch gekennzeichnet, dass** die erste und die zweite Abtriebswelle (32, 33) auf sich zur Längsachse (B-B) des Motors (2) gegenüberliegenden Seiten mit identischem Abstand zur Längsachse (B-B) des Motors (2) beabstandet angeordnet sind.

5. Kraftfahrzeug (1) nach einem der vorhergehenden Ansprüche, **dadurch gekennzeichnet, dass** der Verbrennungsmotor zwei synchron im Gegensinn angetriebene Kurbelwellen (9, 14) aufweist, die mittels jeweils einem Pleuel (17, 18) mit wenigstens einem gemeinsamen Hubkolben (15) verbunden sind.

6. Kraftfahrzeug (1) nach Anspruch 5, **dadurch gekennzeichnet, dass** die Kurbelwellen (9, 14) symmetrisch zur Längsachse (C-C) des Kraftfahrzeugs (1) angeordnet sind.

7. Kraftfahrzeug (1) nach einem der Ansprüche 5 und 6, **dadurch gekennzeichnet, dass** die eine Kurbelwelle (9) mittels eines Zwischengetriebes (11) mit der Antriebswelle (28) des Getriebes (3) verbunden ist.

8. Kraftfahrzeug (1) nach Anspruch 7, **dadurch gekennzeichnet, dass** das Zwischengetriebe (11) ein Stirnradgetriebe (24) ist.

9. Kraftfahrzeug (1) nach Anspruch 8, **dadurch gekennzeichnet, dass** das Stirnradgetriebe (24) aus einem mit der einen Kurbelwelle (9) verbundenen ersten Zahnrad (25) und einem mit der Antriebswelle (28) des Getriebes (3) verbundenen zweiten Zahnrad (26) gebildet ist.

10. Kraftfahrzeug (1) nach Anspruch 9, **dadurch gekennzeichnet, dass** das erste Zahnrad (25) einen geringeren Durchmesser als das zweite Zahnrad (26) aufweist.

11. Kraftfahrzeug (1) nach einem der Ansprüche 5 bis 10, **dadurch gekennzeichnet, dass** die Kurbelwellen (9, 14) horizontal ausgerichtet sind.

12. Kraftfahrzeug (1) nach einem der Ansprüche 5 bis 11; **dadurch gekennzeichnet, dass** an dem dem Zwischengetriebe (11) gegenüberliegenden Ende der Kurbelwellen (9, 14) Schwungräder (22, 23) angeordnet sind.

13. Kraftfahrzeug (1) nach Anspruch 12, **gekennzeichnet durch** wenigstens eine Zapfwelle (46), die mit einer der Kurbelwellen (9, 14), dem Schwungrad (22, 23) der Kurbelwelle (9, 14) benachbart angeordnet, drehfest verbunden ist.

14. Kraftfahrzeug nach einem der vorhergehenden Ansprüche, **dadurch gekennzeichnet, dass** die erste Abtriebswelle (32) und die zweite Abtriebswelle (32) in einer Ebene angeordnet sind.

15. Kraftfahrzeug nach Anspruch 14, **dadurch gekennzeichnet, dass** die Kurbelwellen (9, 14) in der Ebene der Abtriebswellen angeordnet sind.

16. Kraftfahrzeug (1) nach einem der vorhergehenden Ansprüche, **dadurch gekennzeichnet, dass** das Getriebe (3) ein stufenloses Getriebe (3) ist.

17. Kraftfahrzeug (1) nach Anspruch 16, **dadurch gekennzeichnet, dass** das stufenlose Getriebe (3) ein CVT-Getriebe mit einem von der Antriebswelle (28) angetriebenen Kegelscheibenradpaar (30, 31) ist.

18. Kraftfahrzeug (1) nach Anspruch 17, **gekennzeichnet durch** ein vom Kegelscheibenradpaar (30, 31) angetriebenes, das Kegelscheibenradpaar (30, 31) mit der ersten Abtriebswelle (32) und der zweiten Abtriebswelle (33) verbindendes Endlostriebmittel (13).

19. Kraftfahrzeug (1) nach Anspruch 18, **dadurch gekennzeichnet, dass** die Achse des Kegelscheibenradpaars (30, 31), die Achse der ersten Abtriebswelle (32) und die Achse der zweiten Abtriebswelle (33) ein gleichschenkliges Dreieck ausbilden.

20. Kraftfahrzeug (1) nach Anspruch 19, **dadurch gekennzeichnet, dass** das gleichschenklige Dreieck ein stumpfwinkliges Dreieck ist.

21. Kraftfahrzeug (1) nach Anspruch 20, **gekennzeichnet durch** ein zwischen dem Kegelscheibenradpaar (30, 31) und der ersten Abtriebswelle (32) auf das Endlostriebmittel (13) wirkendes erstes Spannmittel (44).

22. Kraftfahrzeug (1) nach einem der Ansprüche 17 bis 21, **gekennzeichnet durch** ein zwischen der ersten Abtriebswelle (32) und der zweiten Abtriebswelle (33) auf das Endlostriebmittel (13) wirkendes zweites Spannmittel (45).

23. Kraftfahrzeug (1) nach Anspruch 22, **dadurch gekennzeichnet, dass** das erste Spannmittel (44) eine hydraulische Spannvorrichtung ist.

24. Kraftfahrzeug (1) nach einem der Ansprüche 22 und 23, **dadurch gekennzeichnet, dass** zweite Spannmittel (45) eine Spannrolle ist.

25. Kraftfahrzeug (1) nach einem der Ansprüche 17 bis 24, **dadurch gekennzeichnet, dass** die erste Abtriebswelle (32) und die zweite Abtriebswelle (33) mit dem Endlostriebmittel (13) zusammenwirkende Umlenkräder (36, 37) aufweisen.

26. Kraftfahrzeug (1) nach einem der Ansprüche 18 bis 25, **dadurch gekennzeichnet, dass** das Endlostriebmittel (13) ein Schubgliederband ist.

27. Kraftfahrzeug (1) nach einem der vorhergehenden Ansprüche, **dadurch gekennzeichnet, dass** das Kraftfahrzeug (1) Allradantrieb aufweist.

28. Kraftfahrzeug (1) nach einem der vorhergehenden Ansprüche, **dadurch gekennzeichnet, dass** das Kraftfahrzeug (1) ein agrar-, forst- und/oder bauwirtschaftliches Kraftfahrzeug ist.
